# EUROPEAN PATENT APPLICATION

(11) **EP 4 740 741 A1**
(43) Date of publication of application: **13.05.2026**
(21) Application number: 25214225.2
(22) Date of filing: 07.11.2025
(51) Int. Cl.: A23B 7/04, C12G 1/02, F28C 3/02, C12G 1/028, F25B 19/00, A23B 7/055, A23B 2/88

(54) **DEVICE AND CORRESPONDING METHOD FOR REFRIGERATING FLUIDS BY HEAT EXCHANGE WITH LIQUEFIED CRYOGENIC GAS IN A TWO-PHASE FLOW**

(30) Priority: 08.11.2024 IT 202400025170
(71) Applicant: Societa' Italiana Acetilene & Derivati S.I.A.D. S.p.A. in breve S.I.A.D. S.p.A., 24126 Bergamo (IT)
(72) Inventor: FRATI, Maurizio, 24126 BERGAMO (IT)
(74) Representative: Bianchetti & Minoja with Trevisan & Cuonzo IPS SRL

(57) **Abstract**

The present invention relates to a device (100) for refrigerating fluids by heat exchange with liquefied cryogenic gases in a two-phase flow comprising a heat exchanger (20) configured to receive at least one fluid to be refrigerated (24), a first supply line (A) activatable to supply a first gaseous (1) to said heat exchanger (20) and a second supply line (B) activatable to supply a liquefied cryogenic gas (11) to said heat exchanger (20).

## Description

### FIELD OF INVENTION

The present invention relates to a device, and a corresponding method, for exchanging heat between fluids by direct contact, wherein one of the fluids is a two-phase refrigerant fluid composed of a liquid phase, consisting of a liquefied cryogenic gas, and a gaseous phase, consisting of the same gas or of a different gas, hereinafter also referred to simply as gas phase. During the heat exchange process, such two-phase refrigerant fluid acts to absorb heat from another fluid in the liquid state, eventually containing also solid parts, which, upon contact with the two-phase refrigerant fluid, releases heat and is thus refrigerated, possibly even undergoing partial freezing. As a result of this heat transfer, the liquid phase of the two-phase refrigerant fluid transitions to the gaseous state.

For simplicity, hereinafter, in the case is not specified, the two-phase refrigerant fluid consisting of the liquid phase, due to the liquefied cryogenic gas and to the gaseous phase will also be referred to as cold fluid.

As fluids that release heat during the heat exchange are considered, by way of example and not limitation, liquids or two-phase fluids consisting of a liquid phase containing solid or semisolid parts and similar materials, hereinafter referred to as hot fluid, fluid to be refrigerated or refrigerated fluid, depending on whether they must undergo, are undergoing or have undergone the refrigerating process, i.e., the heat exchange.

In particular, but without limiting the invention, the hot fluids include food products such as sauces, condiments, fruit juices, vegetable broths containing pieces of the same, pastes obtained from the pressing of vegetables, grape must, i.e., the fluid obtained from the crushing of grapes.

### STATE OF THE ART

Various techniques are known and currently used for direct heat exchange between fluids employing liquefied cryogenic gases as refrigerating fluids, i.e., for absorbing heat during the heat exchange process with another fluid.

In known systems, the heat exchange process is achieved by injecting the liquefied cryogenic gas into the volume of the fluid to be refrigerated. The direct contact between the cold and hot fluids for heat exchange usually occurs in suitable containment devices, also known as exchangers, which may be insulated and/or operated under pressure.

It is known that heat exchange becomes difficult when the hot fluid, during the cooling process, exhibits high viscosity and/or low turbulence. These aspects may lead to localized freezing and cause malfunctions of the apparatus in the zones where heat exchange occurs.

A cryogenic gas is understood to mean a gas that must be maintained at extremely low temperatures, generally below -150°C, to remain in a liquid form. Typical examples of cryogenic gases include liquid nitrogen, liquid oxygen, liquid hydrogen and liquid helium. For the purposes of the process of the heat exchange of the present invention, liquid carbon dioxide is also considered equivalent to a cryogenic gas.

The main liquefied cryogenic gases of industrial interest are carbon dioxide (CO₂) and nitrogen, in the follows also in indicated as CO₂ and N₂, respectively.

In case the liquefied cryogenic gas is N₂, the management of heat exchange is more complex, than, for example, with CO₂, due to the higher thermal gradient, respect to the case of CO₂, relative to the hot fluids to be cooled in normal usage. This gradient causes a high exchange velocity, thus making temperature and management control more difficult.

For an evaluation of the thermal gradient of N₂, it has to be considered that, since nitrogen has a very low boiling temperature (approximately -196°C at atmospheric pressure, and about - 170°C at 10 bar), nitrogen causes an immediate and significant temperature drop, in the regions near the injection point into the hot fluid, as a consequence of the intense localized heat exchange. This may lead to solidification of part of the hot fluid mass close to the injection zone resulting in malfunctions of the exchanger and, in many cases, alteration of the chemical/physical and commercial characteristics and valuation of the product.

As example, as considering as hot fluid grape must, fluid in which the semisolid component consists of crushed grapes and the liquid component consists of juice released from the crushed of them. A heat exchange with sudden, high and localized heat exchange may cause freezing of the grape skins and of must portions, producing obstructions and malfunctions in the exchanger. Moreover, the grape skins exposed to such intense heat exchange can experience excessive cooling, degrading properties important for the final product quality, such as wine.

Such rapid and localized heat exchange can be prevented by generating sufficient turbulence in the hot fluid, so that at the initial contact of the fluids, i.e., near the injection point, the heat is dispersed, exchange in a volume of the fluid to be refrigerated sufficient to avoid undesired temperature, i.e., so to cause the freezing and/or, specially in the case of alimentary fluids, qualitative aspects degradation.

The necessary turbulence can also be obtained, for example, by mechanical means. However, while the use of mechanical means may be suitable for the purpose of heat exchange, it is not appropriate when certain particular hot fluids are involved, since the mechanical action may cause damage to the physical characteristics of the fluid itself, as in the case, for example, of excessive breaking and/or crushing of the grape berries forming the grape must, as well as of the pieces of vegetables contained in the related broths.

### SUMMARY OF THE INVENTION

In light of the above, the object of the present invention is to provide a device, and a corresponding method, capable of achieving direct heat exchange between fluids by acting on the characteristics of the refrigerant fluid and on the manner of its contact with the fluid to be refrigerated, without incurring the aforementioned problems.

Within this scope, another object of the invention is to enable correct heat exchange between a hot and a cold fluid using a two-phase refrigerant fluid as the cold medium, and with the possibility for the latter to be introduced into the heat exchanger independently from the hot fluid, as it is necessary in known systems which involve the injection of the liquefied cryogenic gas into the incoming flow of the hot fluid to form the two-phase mixture used for this type of refrigeration, as it will be described better as follows.

In particular, in the case of the present invention, the two-phase refrigerant fluid comprises a phase in a liquid state and a phase in gaseous state, wherein such phase in gaseous state generates, upon contact with the hot fluid, a sufficient turbulence to promote mixing between the cold and hot fluids, thereby avoiding freezing process of the fluid to be refrigerated. Using a two-phase cold fluid with an appropriate content of the gaseous phase, as described better in the follow, leads to a correct thermal exchange, thus resulting in a rapid, high and homogeneous heat transfer into the volume of the fluid in refrigeration.

Furthermore, the present invention enables new modes of use of liquefied cryogenic gases as refrigerant fluids in direct-contact heat exchange, so that they can be used even in case where, with the known methods, would be difficult or impossible to implement them.

A further object of the invention is to provide a device ensuring the highest reliability and operational safety.

Another object is to provide a device that is easy to manufacture and economically competitive compared with known technologies.

These and other objects are achieved by a device for refrigerating fluids according to claim 1 and by a method for refrigerating fluids according to claim 12.

Other technical features are provided in the relative dependent claims.

### BRIEF DESCRIPTION OF THE DRAWINGS

Further features and advantages of the invention will become clearer from the following detailed description of a preferred, non-limiting embodiment, illustrated with the aid of the accompanying drawings, in which:
- Figure 1 schematically illustrates one embodiment of the device according to the invention;
- Figure 2 schematically and partially illustrates a variant of the device of Figure 1 according to the invention.

### DETAILED DESCRIPTION OF THE INVENTION

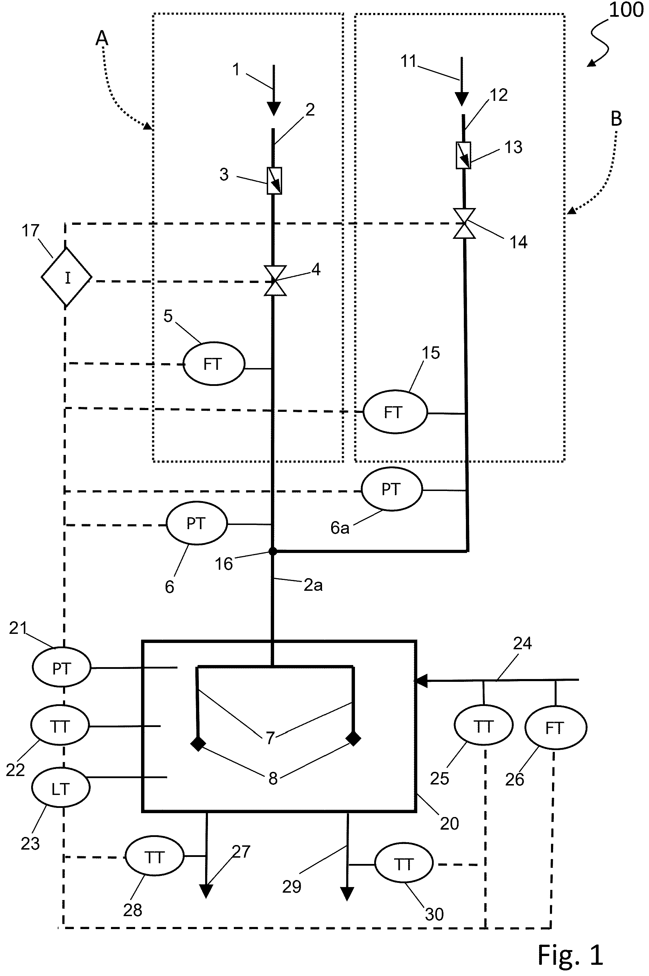

With particular reference to Figure 1, with the reference number 100 is generally identified a device for refrigerating fluids.

According to the invention, the device 100 comprises:
- a heat exchanger 20 configured to receive at least one fluid to be refrigerated 24;
- a first supply line A to be activated to supply a gaseous 1 to said heat exchanger 20;
- a second supply line B to be activated to supply a liquefied cryogenic gas 11, such as nitrogen normally used for industrial applications, to said heat exchanger 20.

According to the invention, the first supply line A and the second supply line B comprise respectively a first conduit 2 and a second conduit 12 hydraulically connected to each other and to a third conduit 2a at a connection point 16 upstream of the heat exchanger 20. The third conduit 2a ends in at least one injector 8 apt to inject said gaseous 1 and/or said liquefied cryogenic gas 11 into said heat exchanger 20. According to the invention, the first supply line A is to be activated when at least one injector 8 is immersed in the fluid to be refrigerated 24 and the second supply line B is not activated, in order to flush at least said injector 8 and the third conduit 2a to prevent clogging by the fluid to be refrigerated 24.

The present invention also relates to a method for refrigerating a fluid to be refrigerated 24 contained in a heat exchanger 20, comprising the steps of:
- activating a first supply line A to supply a gaseous 1 towards the heat exchanger 20 along a first conduit 2;
- activating a second supply line B to supply a liquefied cryogenic gas 11, for example liquid nitrogen normally used for industrial refrigerating processes, towards the heat exchanger 20 along a second conduit 12;
- introducing into the heat exchanger 20, through a third conduit 2a in fluid communication with the first conduit 2 and with the second conduit 12 at a connection point 16 and ending with at least one injector 8, said gaseous 1 and/or said liquefied cryogenic gas 11 in order to lower the temperature of the fluid to be refrigerated 24;
- activating the first supply line A when said at least one injector 8 is immersed in said fluid to be refrigerated 24 and the second supply line B is not activated, so as to flush at least said injector 8 and said third conduit 2a to prevent clogging by said fluid to be refrigerated 24.

Preferably, at the connection point 16, the gaseous 1 and the liquefied cryogenic gas 11 mix to form a two-phase refrigerant fluid.

Advantageously, the possibility of activating the first supply line A makes it possible not only to obtain a two-phase refrigerant fluid before entering the heat exchanger 20, where appropriate, but also to prevent any kind of clogging of the injector 8 and of the related third conduit 2a. In particular, the possibility of activating the first supply line A allows flushing and pressurizing the gaseous 1 contained in the third conduit 2a and in the injector 8 so as to prevent the undesired entry of the fluid to be refrigerated 24 into these conduits and to avoid the formation of a solid phase in the conduit of the liquefied cryogenic gas 11, as explained in detail below.

Preferably, since the first conduit 2 and the second conduit 12 are in fluid communication with the third conduit 2a through the connection point 16, the flushing of the injector 8 and of the third conduit 2a also involves the conduits 2 and/or 12 at least in the portions directly in fluid communication with the third conduit 2a. For example, with reference to Figure 1, the flushing of the injector 8 and of the third conduit 2a also affects the portion of conduit 2 downstream of the second flow control device 14, since the flushing also pressurizes the part of conduit 12 downstream of the second flow control device 14, thus preventing undesired entry of the fluid to be refrigerated 24 into these conduits.

Preferably, both the gaseous 1 and the liquefied cryogenic gas 11 originate from a storage tank or from generic sources and are supplied to the respective supply lines A, B of the device 100 at suitable pressure and temperature conditions.

Preferably, the first supply line A comprises a first flow control device 4 installed on the first conduit 2 and configured to regulate the flow rate of the gaseous 1 within the first conduit 2.

Preferably, the second supply line B comprises a second flow control device 14 installed on the second conduit 12 and configured to regulate the flow rate of the liquefied cryogenic gas 11 within the second conduit 12.

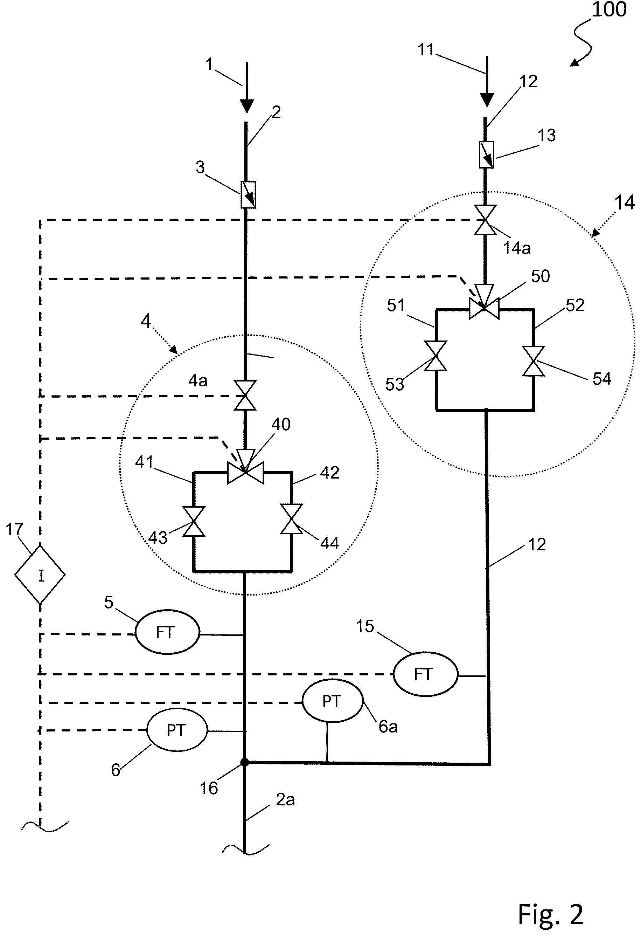

As illustrated in Figure 2, referring to a variant of the device 100, the first flow control device 4 of Figure 1 is replaced by a shut-off valve 4a, of the ON-OFF type, configured to enable or interrupt the flow of the gaseous 1, and by a three-way valve 40, configured to selectively direct the flow of the gaseous 1 into a first secondary conduit 41 or into a second secondary conduit 42, where respective flow regulators 43, 44 are installed to enable the delivery of the flow of the gaseous 1 exiting the first flow control device 4 at different flow rates.

Furthermore, the second flow control device 14 of Figure 1 is replaced by a shut-off valve 14a, of the ON-OFF type, configured to enable or interrupt the flow of the liquefied cryogenic gas 11, and a three-way valve 50 configured to selectively direct the flow of the liquefied cryogenic gas 11 into a first secondary conduit 51 or into a second secondary conduit 52, where respective flow regulators 53, 54, which can optionally be manually operated, are installed to enable the delivery of the flow of the liquefied cryogenic gas 11 exiting the second flow control device 14 at different flow rates.

The flow regulators 43, 44, 53, 54 can be defined by calibrated orifices, or by manually adjustable flow control valves.

Preferably, the second conduit 12 comprises, in correspondence at said connection point 16, a component such as an atomizing nozzle or similar device suitable for dispersing the liquefied cryogenic gas 11 into the gaseous 1 to obtain a two-phase refrigerant fluid in which the liquid phase is dispersed in the gaseous phase in the form of small droplets or, preferably, spray.

Preferably, the connection point 16, and consequently the atomizing nozzle located therein, is positioned as close as possible to the at least one injector 8, and their connecting conduit 2a is preferably oriented vertically/drainage.

Preferably, the liquefied cryogenic gas 11 comprises nitrogen or other liquefied cryogenic gases normally used for industrial refrigerating applications.

Preferably, the gaseous 1 comprises the liquefied cryogenic gas 11 in gaseous state or another liquefied cryogenic gas, or mixtures of gases chemically compatible with the fluid to be refrigerated 24 and free of components solidifiable under the operating conditions of the device 100.

As illustrated in the figures, the first supply line A and the second supply line B may comprise, respectively, a first one-way valve 3 and a second one-way valve 13 arranged upstream of the respective flow control devices 4, 14.

As shown in Figures 1 and 2, the device 100 comprises a plurality of pressure, flow and temperature measuring devices, which are in data communication with a central control unit 17. The dashed lines indicate signal connections between said measuring devices, the flow control devices within the device 100 itself, and the central control unit 17, as explained better below.

Preferably, the device 100 comprises, in addition to the central control unit 17, two pressure sensors 6, 6a in data communication with said control unit 17. The pressure sensor 6 is configured to detect the pressure of the fluid present in conduits 2, 2a near the connection point 16, while the pressure sensor 6a detects the pressure in the conduit 12 downstream of the second flow control device 14.

Preferably, also the first flow control device 4 and the second flow control device 14 are in data communication with the control unit 17.

Preferably, the pressure measurements obtained from sensors 6, 6a can be processed by the control unit 17 to activate the first 4 and/or the second 14 flow control devices, as explained below.

Preferably, the device 100 further comprises, in addition to the control unit 17:
- a first flow sensor 5 in data communication with the central control unit 17, installed in the first supply line A and apt to measure the flow rate of the gaseous 1 along the first conduit 2;
- a second flow sensor 15 in data communication with the central control unit 17, installed in the second supply line B and apt to measure the flow rate of the liquefied cryogenic gas 11 along the second conduit 12; and
- a temperature sensor 22 in data communication with the central control unit 17, installed in the heat exchanger 20 and apt to measure the temperature of the fluid to be refrigerated 24.

Preferably, the measure of the flow rates of the gaseous 1 and of the liquefied cryogenic gas 11 along their respective conduits 2, 12 can be processed by the control unit 17, together with the temperature measurement of the fluid to be refrigerated 24 detected by the temperature sensor 22, to activate the first 4 and/or second 14 flow control devices, for example to obtain a two-phase refrigerant fluid having a desired ratio between the liquid and gaseous phases, as explained below.

Preferably, in line with the above, the method for refrigerating a hot fluid to be refrigerated 24 comprises at least one of the following two additional steps (i) and (ii):
(i) a step of detecting the pressure value of the fluid present in the conduits 2, 12, 2a near the connection point 16 by means of the pressure sensor 6 and the pressure sensor 6a, as well as detecting the level of the fluid to be refrigerated 24 inside the heat exchanger 20 by means of a level sensor 23, the pressure sensors 6, 6a and the level sensor 23 being in data communication with the central control unit 17, and activating, through said control unit 17, the first flow control device 4 installed on the first supply line A and/or the second flow control device 14 installed on the second supply line B;
(ii) a step of measuring the flow rate of the gaseous 1 along the first conduit 2 by means of a first flow sensor 5 in data communication with the central control unit 17, measuring the flow rate of the liquefied cryogenic gas 11 along the second conduit 12 by means of a second flow sensor 15 in data communication with the central control unit 17, measuring the temperature of the fluid to be refrigerated 24 through a temperature sensor 25 at the inlet of the heat exchanger 20, measuring the flow rate of the fluid to be refrigerated 24 through a flow sensor 26 at the inlet of the heat exchanger 20, measuring the temperature of the refrigerated fluid 27 through a temperature sensor 28 at the outlet of the heat exchanger 20, measuring the level of the fluid to be refrigerated 24 through the level sensor 23 inside the heat exchanger 20, and measuring the internal pressure of the heat exchanger 20 through a pressure sensor 21, the temperature sensors 25, 27, flow sensor 26, and level sensor 23 being in data communication with the central control unit 17, and activating, through said control unit 17, the first flow control device 4 installed on the first supply line A and/or the second flow control device 14 installed on the second supply line B.

Preferably, the heat exchanger 20 is a containment vessel, optionally insulated and/or operating under pressure, in which contact occurs between the cold and hot fluids.

Preferably, the heat exchanger 20 comprises an inlet temperature sensor 25 and an inlet flow sensor 26 configured to detect the temperature and flow rate of the fluid to be refrigerated 24 entering the heat exchanger 20, both in data communication with the central control unit 17.

Preferably, the heat exchanger 20 also comprises an outlet temperature sensor 28 configured to detect the temperature of the refrigerated fluid 27 exiting the heat exchanger 20. The outlet temperature sensor 28 also is in data communication with the central control unit 17.

Preferably, the heat exchanger 20 also comprises an outlet 29 for the gaseous phase of the two-phase refrigerant fluid resulting from the vaporization of its liquid phase following the heat exchange with the fluid to be refrigerated 24 and from the gaseous phase contained in the two-phase refrigerant fluid entering the heat exchanger 20. Preferably, the heat exchanger 20 further comprises a temperature sensor 30 for measuring the temperature of the gaseous flow exiting through outlet 29, the sensor 30 also being in data communication with the control unit 17.

Preferably, the heat exchanger 20 also comprises a pressure sensor 21 for detecting the internal pressure of the heat exchanger 20 itself, also both in data communication with the control unit 17.

Preferably, the heat exchanger 20 comprises a level sensor 23, in data communication with the control unit 17, configured to measure the level of the hot fluid to be refrigerated 24 inside the heat exchanger 20, in order to determine, for example, when the level is such that the fluid to be refrigerated 24 submerges the injector 8, measuring anyhow the level of the filing inside the heat exchanger 20, and/or to verify whether it is at a level suitable to perform the heat exchange, thereby allowing the introduction of the two-phase refrigerant fluid into the heat exchanger 20.

Preferably, the device 100 comprises a plurality of injectors 8, distributed within the heat exchanger 20 or in correspondence of the lateral side walls of the heat exchanger 20. In this case, the third conduit 2a branches into a plurality of secondary conduits 7, each connected to a respective injector 8.

The injectors 8 can be fixed to the walls of the heat exchanger 20, for example to its side walls, in which case the secondary conduits 7 are almost entirely external to the heat exchanger 20.

Advantageously, the inlet of the hot fluid 24 to be refrigerated and the outlet of the refrigerated fluid 27 can be implemented using known devices, such as pumps, conveyors, or screw feeders, not illustrated in the figures, depending on the characteristics of the fluid. In cases where it is preferable to avoid mechanical movement with mechanical devices, such as with two-phase fluids in food applications (e.g. grape must, fruit juices with pieces and similar), the discharge of the fluid can be achieved by gravity by positioning the heat exchanger 20 at a suitable height.

Figure 2 schematically illustrates a variant of the device 100 suitable when it is not necessary to operate with continuous variations of flow rate and/or composition of the two-phase flow, but only with a limited number of such variations.

As explained above, in this variant the flow control devices 4, 14 comprised the follow components:
- shut-off valves 4a, 14a operating in ON-OFF mode;
- three-way valves 40, 50;
- flow regulators 43, 44, 53, 54, which can be manual valves or calibrated orifices;
- secondary conduits 41, 42, 51, 52 which begin and ends in the respective main conduits 2, 12.

The difference between using flow regulating valves and calibrated orifices lies in the greater flexibility and ease of adjustment provided by the valves, allowing more operational versatility than the calibrated orifices.

More specifically, valve 4a operates in ON-OFF mode, while the three-way valve 40 directs the flow of the gaseous 1 into the two distinct secondary conduits, i.e., the conduit 41 and the conduit 42, where valves 43, 44 deliver different flow rates, in particular one for flushing and the other for the gas flow apt to form the two-phase flow.

Valve 14a also operates in ON-OFF mode, while the three-way valve 50 directs the cold fluid into conduits 51 or 52, where components 53, 54 deliver two alternative flow rates of liquefied cryogenic gas 11 that continue through the second conduit 12, the connection point 16, the third conduit 2a, and finally the heat exchanger 20.

In particular, if the flow regulators 43, 44, and 53, 54 are calibrated orifices, two different flow rates can be defined simply by operating the three-way valves 40, 50, both for the gaseous 1 and for the liquefied cryogenic gas 11, and, as said above, one orifice allows the gaseous 1 to be supplied for flushing and for addition as gaseous phase to the liquefied cryogenic gas 11 as component of a first two-phase flow, while the other allows the gaseous to be supplied for formation of a second two-phase flow.

More specifically, orifices 53, 54 are configured to supply the liquefied cryogenic gas 11 at two different flow rates to form two two-phase flows with different liquid/gas ratios. Combining the possibilities offered by the four orifices enables the generation of four two-phase flows differing in composition and flow rate. Additionally to what said above, with the four orifices 43, 44, and 53, 54 is possible to enlarge the combination of the composition/flow rate of the two-phase flows by adjusting the pressure difference between upstream and downstream of the flow of the gaseous 1 and/or the liquefied cryogenic gas 11 through known devices, not illustrated in figure 2, and where the pressure upstream are measure by pressure sensors 6, 6a, respectively, for the gaseous 1 and for the liquefied cryogenic gas 111. Such pressure difference allows to vary the flow rate of each orifice.

Advantageously, to ensure homogeneous distribution of refrigeration within the two-phase refrigerant fluid and thus to further minimize the risk of sudden or localized cooling, the liquid phase, i.e., the liquefied cryogenic gas 11, is dispersed in small droplets, preferably atomized, within the gaseous phase, and then injected into the mass of the fluid to be refrigerated 24 through the injector 8.

What said above refers to the usage of liquefied cryogenic gases where the work pressure within the heat exchanger 20 is above of the triple point, so that it allows to operate, in addition into the heat exchanger 20, also in the conduits and the components upstream of the at least one injector 8 and of the conduits 2, 12 and 2a without the presence of their solid phase, thus avoiding the risks of malfunction of the present system caused by clogging of the above mentioned components.

The triple point of N₂ is at a pressure of 0.12 bar and a temperature of -210 °C, therefore, in practice, operation generally takes place at higher pressures, and what has been described above is applicable.

An industrially relevant case of use of a liquefied cryogenic gas employed in a heat exchanger 20 operating at a pressure lower than its triple point is that concerning CO₂, whose triple point pressure is 5.2 bar and temperature is -56 °C.

In this case, the supply conduits for the liquefied cryogenic gas 12 and 2a, as well as 7 and the at least one injector 8 must operate at a pressure higher than the triple point pressure. This can be achieved by pressurizing them before introducing liquid CO₂, operating according to methods known to the current state of the art, for example as described in US 2012/0291480, which discloses a liquid CO₂ refrigeration system.

The use of a liquefied cryogenic gas dispersed in a gaseous flow, particularly to form a two-phase flow as described above, makes its behavior during the heat exchange practically comparable to that of a gaseous medium having high thermal capacity, with the property of releasing refrigeration both as latent heat of vaporization of the liquefied cryogenic gas portion, released at its boiling temperature, and as sensible heat of the initial gaseous phase and of that generated by vaporization of the liquefied cryogenic gas.

For proper operation of the invention, it is necessary that the refrigerant fluid and the hot fluid be compatible with the operating characteristics of the refrigerating process, such as, primarily, absence of formation of solid agglomerates, absence of damage due to excessive localized temperature reductions, and chemical compatibility between the hot fluid and the refrigerant fluid. The absence of formation of solid agglomerates results from an appropriate gaseous/liquefied cryogenic gas ratio in the cold fluid, such ratio which depends on the boiling temperature of the liquefied cryogenic gas, its latent heat, and the physic-chemical characteristics of the hot fluid such as density, viscosity, and solidification/freezing temperature.

In particular, physic-chemical compatibility is decisive in the selection of both the gas forming the gaseous phase of the two-phase flow and the liquefied cryogenic gas, in order to avoid in the refrigerated fluid any variations of its characteristics and specific properties with respect to its pre-refrigeration state. For example, but without limitation, in the refrigeration of a hot fluid incompatible with acidification and/or carbonation, it is evident that the use of CO₂ both as liquefied cryogenic gas and as gaseous phase in the two-phase flow is not permissible.

In the specific configuration of the device, the gaseous present in the two-phase flow introduced into the heat exchanger performs, as mentioned above, the function of generating the turbulence necessary to avoid formation of frozen agglomerates and possible excessive temperature reductions in the fluid being refrigerated near the injection point, hence the need to supply a two-phase fluid with a suitable gaseous/liquefied cryogenic gas ratio.

The portion involved in the heat exchange closest to the injection point is the most critical, since in the remaining part the gaseous/liquefied cryogenic gas ratio increases as a consequence of the heat exchange itself, due to the vaporization of the liquefied cryogenic gas. The minimum sufficient value of the gaseous/liquefied cryogenic gas ratio in the two-phase flow entering the heat exchanger 20 must be determined experimentally, based on empirical correlations between the physic-chemical characteristics of the fluids involved in the exchange, mainly:
For the hot fluid: density, viscosity, solidification temperature, temperature of degradation of qualitative/organoleptic characteristics, and pH.

For the two-phase flow: boiling temperature and latent heat of vaporization of the liquefied cryogenic gas at working pressure, solubility in the refrigerated fluid, and reactivity with the fluid being refrigerated.

The qualitative correlation between these characteristics and the extent of the gaseous/liquefied cryogenic gas ratio can therefore be summarized as follows:
- directly proportional to the density, viscosity and solidification temperature of the hot fluid, to the temperature of solidification and degradation of the hot fluid, and to the latent heat of the liquefied cryogenic gas;
- inversely proportional to the boiling temperature of the liquefied cryogenic gas.

All the sensing and measuring components installed in the field, such as pressure, flow and temperature sensors, are connected, in case of automatic operation, to the central control unit 17, which may comprise a PLC or similar components designed, according to defined logic, to manage the elements required for operation of the device 100.

The operation of the device 100 can take place in manual mode, where the operator acts on the valves following a defined logic, or in automatic mode controlled by a PLC, or equivalent component programmed with a dedicated software, as described below.

For a better understanding of the invention, some possible operating logics are illustrated below, by way of example but not limitation.

According to the scheme of Figure 1, the device 100 is ready to be started with the flow control devices 4 and 14 closed, and with the conduits 2 and 12 connected to the respective sources of the gaseous 1 and of the liquefied cryogenic gas 11, under thermodynamic conditions of suitable temperature and pressure.

The preliminary operation consists in flushing the third conduit 2a with the first gaseous 1, together with its secondary conduits 7 and injectors 8, in order to prevent their possible clogging following the introduction of the fluid to be refrigerated 24 into the heat exchanger 20. In particular, the flushing with the first gaseous 1 must always be active when the injectors 8 are immersed in the fluid to be refrigerated 24 and the delivery of the liquefied cryogenic gas 11 is not active, that is, when the second supply line B is not operated.

Such flushing is carried out by partially opening the valve member 4 until the pressure in the first conduit 2, detected by the pressure sensor 6, reaches a value, by way of indication and not limitation, at least 1-2 bar higher than the operating pressure of the heat exchanger 20, the latter being known by estimation or preferably detected by the corresponding pressure sensor 21.

Once the system has been prepared for operation as described above, the fluid to be refrigerated 24 can be introduced, and when its level inside the heat exchanger 20, detected by the level sensor 23, has reached a value such as to submerge the injectors 8 by an appropriate head sufficient to allow correct heat exchange, the two-phase refrigerant fluid can be delivered, in the required proportions of gaseous and liquefied cryogenic gas and in the desired quantities.

As regards the flow rates of the gaseous 1 and of the liquefied cryogenic gas 11, in order to obtain a two-phase refrigerant fluid, the cold fluid, having gaseous and liquid phases in a specific ratio between them and in a desired total quantity, is regulated through the valve members 4 and 14, based on the flow measurements made by the flow sensors 5 and 15.

The flow rate of the cold fluid and the delivery mode thereof are established according to the refrigeration required in the heat exchange.

Preferably, the flow rate may be constant and the delivery may be of the ON-OFF type, or continuous delivery with variable flow rate.

When the delivery of the refrigerant fluid is no longer required, because the desired temperature of the fluid to be refrigerated 24 has been reached, as detected by the temperature sensor 22, or due to the absence of said fluid 24 in the heat exchanger 20, or because it is present at a level insufficient to adequately submerge the injectors 8, as detected by the level sensor 23, the flow control device 14 of the liquefied cryogenic gas 11 is closed, and through the flow control device 4, the flow rate of the first gaseous 1 is adjusted so as to maintain its flow at values suitable to prevent clogging of the injectors 8, as described previously.

The refrigeration of the hot fluid 24 is therefore carried out by repeating, for the time and frequency necessary, the operations described above until the required temperature is reached.

The operation of the device 100 according to the variant of Figure 2 differs from the operation of Figure 1 due to the replacement of the more complex flow control devices 4 and 14, respectively, with the ON-OFF valve 4a, the three-way valve 40, and the manual or calibrated-orifice proportional valves 43 and 44 for the first flow control device 4 in the first supply line A, and with the ON-OFF valve 14a, the three-way valve 50, and the manual or calibrated-orifice proportional valves 53 and 54 for the second flow control device 14 in the second supply line B.

These modifications imply that, with regard to the management of the gaseous 1 for flushing the injectors 8, the operation is performed by opening valve 4a and rotating the three-way valve 40 to open towards the manual regulating valve/calibrated orifice 43 or 44, arranged to deliver the gaseous 1 at a flow rate and pressure sufficient for flushing.

For the delivery of the two-phase flow, the operation concerning the first gaseous 1 consists in rotating the three-way valve 40 towards the manual regulating valve/calibrated orifice 43 or 44, arranged to deliver the first gaseous 1 at a predefined and constant flow rate for the gaseous phase of the two-phase flow.

The delivery of the liquefied cryogenic gas is performed by opening valve 14a and rotating the three-way valve 50 towards the manual regulating valve/calibrated orifice 53 or 54, arranged to deliver a predefined and constant required flow rate. As there are two manual regulating valves/calibrated orifices, the 53 and 54, set for different flow rates, it is possible, by rotating the three-way valve 50 towards one or the other, to deliver different quantities to form two-phase flows with different gaseous/liquefied cryogenic gas ratios.

With this variant, the possibility of having two flow rates for the gaseous phase and two flow rates for the liquefied cryogenic gas, combinable with each other in forming the two-phase flow, makes it possible to use four two-phase flows with different flow rates and gaseous/liquefied cryogenic gas ratios simply by rotating the three-way valves 40 and 50.

As is evident from the components, the solution of Figure 2 has lower manufacturing and maintenance costs compared with that illustrated in Figure 1 and is able to provide the required performance in applications where it is not necessary to frequently have two-phase flows other than the four possible with the solution of Figure 2, to which others can nevertheless be added by expanding the possible combinations of the composition/flow rate pair of the two-phase flows, operating solely with different pressure differentials between upstream and downstream of the same regulating members 41, 42 and 51, 52, respectively by adjusting the pressure in the flows 1 and/or 11 through known equipment, not illustrated in Figure 2, said pressure differential, detected downstream of such regulating members through the pressure sensors 6 and 6a, allowing variation of the flow rate of the same individual orifices, detectable by components 5 and 15.

The gaseous/liquefied cryogenic gas ratio in the refrigerant fluid and its flow rate defined by the method described above are approximate compared with those obtainable by operating through the regulating valves 4 and 14 controlled automatically by the central control unit 17, as illustrated in Figure 1, however, this approximation does not affect, in practice, the substantial operation of the heat exchange if it is on the higher side and within a limited range.

Regarding the movement of the hot fluid, at the inlet through conduit 24 and, once refrigerated, at the outlet conduit 27, it is carried out by means of suitable known devices such as pumps, conveyor belts, screw feeders, or others depending on the characteristics of the fluid, and is performed, during operation, taking into account the level sensor 23 inside the heat exchanger 20, to ensure the presence of a head of the fluid to be refrigerated 24 above the injectors 8 sufficient to allow proper heat exchange.

Preferably, in the case in which the fluid to be refrigerated 24 has characteristics such that it is necessary, or at least preferable, to avoid movement by mechanical means, the inlet and outlet of the fluid may be achieved by gravity by positioning the heat exchanger 20 at appropriate heights without this affecting the operation of the device 100.

It has been practically observed that the device and the corresponding method for refrigerating fluids through heat exchange with liquefied cryogenic gases in two-phase flow, according to the present invention, fulfil the task and achieve the intended purposes, as they allow obtaining correct heat exchange between a hot fluid and a refrigerant fluid, permitting the refrigerant fluid to be introduced into the heat exchanger independently of the introduction of the hot fluid, as required by the heat exchange conditions, through the use of a two-phase fluid as refrigerant fluid. In particular, such a two-phase fluid comprises a part in liquid state and the other in gaseous state, wherein the gaseous part generates, upon contact with the hot fluid, sufficient turbulence to achieve mixing between the hot fluid and the refrigerant fluid capable of preventing freezing processes.

The device and the corresponding method also present the advantage of being applicable to refrigerating processes involving frequent interruptions of the feeding flows of the hot fluid, as frequently occurs in industrial processes, and particularly in batch operation.

Another advantage of the device according to the invention consists in performing the heat exchange by direct contact between the fluids, acting on the characteristics of the refrigerant fluid and on the modalities of realizing the thermal contact with the fluid to be refrigerated, in such a way as to avoid the problems affecting the known art.

A further advantage of the device according to the invention consists in the fact that it allows simple use of liquefied cryogenic gases as refrigerant fluids in direct-contact heat exchange.

Naturally, the invention is not limited to the particular embodiments described above and shown in the accompanying drawings, but it is susceptible to numerous detail modifications within the reach of a person skilled in the art, without departing from the scope of the invention itself as defined in the appended claims.

## Claims

1. Device (100) for refrigerating fluids comprising:
- a heat exchanger (20) configured to receive at least one fluid to be refrigerated (24);
- a first supply line (A) to be activated to supply a gaseous (1) to said heat exchanger (20);
- a second supply line (B) to be activated to supply a liquefied cryogenic gas (11) to said heat exchanger (20);
said first supply line (A) and said second supply line (B) comprising a first conduit (2) and a second conduit (12), respectively, hydraulically connected to each other and to a third conduit (2a) at a connection point (16) upstream of said heat exchanger (20), said third conduit (2a) ending in at least one injector (8) apt to inject said liquefied cryogenic gas (11) and/or said gaseous (1) into said heat exchanger (20),
wherein said first supply line (A) is to be activated when said at least one injector (8) is immersed in said fluid to be refrigerated (24) and said second supply line (B) is not activated, in order to flush at least said injector (8) and said third conduit (2a) to prevent clogging by said fluid to be refrigerated (24).

2. Device (100) according to claim 1, wherein, at said connection point (16), said gaseous (1) and said liquefied cryogenic gas (11) mix to form a two-phase refrigerant fluid.

3. Device (100) according to claim 1 or 2, wherein said first supply line (A) comprises a first flow control device (4) installed on said first conduit (2) and configured to regulate the flow of said gaseous (1) within said first conduit (2), and wherein said second supply line (B) comprises a second flow control device (14) installed on said second conduit (12) and configured to regulate the flow of said liquefied cryogenic gas (11) within said second conduit (12).

4. Device (100) according to claim 1 or 2, wherein said first flow control device (4) comprises a shut-off valve (4a), configured to enable or interrupt the flow of said gaseous (1), and a three-way valve (40), configured to selectively direct the flow of said gaseous (1) into a first secondary conduit (41) or into a second secondary conduit (42), each equipped with respective manual flow regulators (43, 44) apt to enable the delivery of said flow of said gaseous (1) exiting said first flow control device (4) at mutually different flow rates, and wherein said second flow control device (14) comprises a shut-off valve (14a), configured to enable or interrupt the flow of said liquefied cryogenic gas (11), and a three-way valve (50), configured to selectively direct the flow of said liquefied cryogenic gas (11) into a first secondary conduit (51) or into a second secondary conduit (52), each equipped with respective manual flow regulators (53, 54) apt to enable the delivery of said flow of said liquefied cryogenic gas (11) exiting said second flow control device (14) at mutually different flow rates.

5. Device (100) according to one or more of the preceding claims, wherein said second conduit (12) comprises, at said connection point (16), an atomizing nozzle apt to disperse in form of microparticles said liquefied cryogenic gas (11) into said gaseous (1) to obtain said two-phase refrigerant fluid so that the liquid phase is dispersed in the gaseous phase.

6. Device (100) according to one or more of the preceding claims, wherein said liquefied cryogenic gas (11) comprises nitrogen or other liquefied refrigerant gases normally used for industrial refrigerating applications.

7. Device (100) according to one or more of the preceding claims, wherein said gaseous (1) comprises said liquefied cryogenic gas (11) in the gaseous state, or another liquefied cryogenic gas, or mixtures of gases chemically compatible with said fluid to be refrigerated (24) and free of components solidifiable under the operating conditions of said device (100).

8. Device (100) according to one or more of the preceding claims, comprising a central control unit (17) and pressure sensors (6, 6a) in data communication with said central control unit (17), said pressure sensors (6, 6a) being apt to detect the pressure value of the fluids present in the conduits (2, 12, 2a) in proximity to said connection point (16).

9. Device (100) according to the preceding claim, further comprising:
- a first flow sensor (5) in data communication with said central control unit (17), installed in said first supply line (A) and apt to measure the flow rate of said gaseous (1) along said first conduit (2);
- a second flow sensor (15) in data communication with said central control unit (17), installed in said second supply line (B) and apt to measure the flow rate of said liquefied cryogenic gas (11) along said second conduit (12); and
- a temperature sensor (22) in data communication with said central control unit (17), installed in said heat exchanger (20) and apt to measure the temperature of said fluid to be refrigerated (24).

10. Device (100) according to one or more of the preceding claims, wherein said heat exchanger (20) comprises a level sensor (23) in data communication with said central control unit (17) apt to measure the level of said fluid to be refrigerated (24) within said heat exchanger (20), so as to determine when said fluid to be refrigerated (24) submerges said at least one injector (8), and/or whether said fluid to be refrigerated is at a suitable level within said heat exchanger (20) to perform heat exchange, allowing the sending of said two-phase refrigerant fluid into said heat exchanger (20).

11. Device (100) according to one or more of the preceding claims, comprising a plurality of injectors (8), distributed within said heat exchanger (20) or along the side walls of said heat exchanger (20), said third conduit (2a) branching into a plurality of secondary conduits (7), each leading to a respective injector (8) of said plurality of injectors (8).

12. Method for refrigerating a fluid to be refrigerated (24) contained in a heat exchanger (20), comprising the steps of:
- activating a first supply line (A) to supply a gaseous (1) towards said heat exchanger (20) along a first conduit (2);
- activating a second supply line (B) to supply a liquefied cryogenic gas (11) towards said heat exchanger (20) along a second conduit (12);
- introducing, through a third conduit (2a) in fluid communication with said first conduit (2) and with said second conduit (12) in correspondence to a connection point (16) and ending with at least one injector (8), said gaseous (1) and said liquefied cryogenic gas (11) into said heat exchanger (20) to refrigerate said fluid to be refrigerated (24);
- activating said first supply line (A) when said at least one injector (8) is immersed in said fluid to be refrigerated (24) and said second supply line (B) is not activated, in order to flush at least said injector (8) and said third conduit (2a) to prevent clogging by said fluid to be refrigerated (24).

13. Method according to claim 11, comprising at least one of:
(i) a step of measuring the pressure value of the fluid present in the conduits (2, 12, 2a) in proximity of said connection point (16) by means of pressure sensors (6, 6a), as well as the level value of said fluid to be refrigerated (24) within said heat exchanger (20) by means of said level sensor (23), said pressure sensors (6, 6a) and said level sensor (23) being in data communication with a central control unit (17), and of activating, through said central control unit (17), a first flow control device (4) installed on said first supply line (A);
(ii) a step of measuring the flow rate of said gaseous (1) along said first conduit (2) by means of a first flow sensor (5) in data communication with said central control unit (17), measuring the flow rate of said liquefied cryogenic gas (11) along said second conduit (12) by means of a second flow sensor (15) in data communication with said central control unit (17), measuring the temperature of said fluid to be refrigerated (24) by means of a temperature sensor (25) at the inlet of said heat exchanger (20), measuring the flow of said fluid to be refrigerated (24) through a flow sensor (26) at the inlet of said heat exchanger (20), the temperature of refrigerated fluid (27) through the temperature sensor (28) at the outlet of said heat exchanger (20), measuring the level of said fluid to be refrigerated (24) through said level sensor (23) within said heat exchanger (20), measuring the internal pressure of said heat exchanger (20) through a pressure sensor (21), said temperature sensors (25, 27), said flow sensor (26) and said level sensor (23) being in data communication with said central control unit (17), and activating, by means of said central control unit (17), a first flow control device (4) installed on said first supply line (A) and/or a second flow control device (14) installed on said second supply line (B).
